# EUROPEAN PATENT APPLICATION

(11) **EP 4 485 203 A1**
(43) Date of publication of application: **01.01.2025**
(21) Application number: 23215666.1
(22) Date of filing: 11.12.2023
(51) Int. Cl.: G06F 9/54, G01S 5/02, G06F 9/48, G01S 11/06, H04W 4/02, H04W 76/10, H04B 17/318, G07C 9/00

(54) **ACTION EXECUTION METHOD AND APPARATUS, DISTANCE DETERMINATION METHOD AND APPARATUS, DEVICE, AND STORAGE MEDIUM**

(30) Priority: 28.06.2023 CN 202310783313
(71) Applicant: Chongqing Changan Automobile Co Ltd, Chongqing 400023 (CN)
(72) Inventor: Yang, Bin, Chongqing, 400023 (CN); Sun, Liang, Chongqing, 400023 (CN); Yuan, Ye, Chongqing, 400023 (CN); Qu, Xiansheng, Chongqing, 400023 (CN); Yang, Tengyu, Chongqing, 400023 (CN)
(74) Representative: Patentanwaltskanzlei Matschnig & Forsthuber OG

(57) **Abstract**

Provided are an action execution method and apparatus, a distance determination method and apparatus, a device, and a storage medium, relating to the technical field of wireless communications. The action execution method is applied to a transmitting device. The action execution method includes: determining transmitting power of each target channel according to a signal distance range of each target channel; transmitting a broadcast signal on the basis of the transmitting power of each target channel; establishing a communication connection to a receiving device in response to a communication request of the receiving device; sending the signal distance range of each target channel to the receiving device; and executing a response action according to a received signal distance range at which the receiving device is currently located. The transmitting device executes the response action according to the signal distance range at which the receiving device is located, so as to provide a desired intelligent interaction scenario for a user. The signal distance range at which the receiving device is located can be accurately determined without acquiring a field intensity of a signal.

## Description

### Field of the Invention

The present disclosure relates to the technical field of wireless communications, and in particular, to an action execution method and apparatus, a distance determination method and apparatus, a device, and a storage medium.

### Background of the Invention

With the rapid development of a wireless positioning technology, in an intelligent interaction scenario, intelligent devices can execute desired response actions of users according to distance ranges at which the users are located. By way of example, the intelligent device is an automobile. The automobile communicates wirelessly with a device carried by a user, and determines, according to a field intensity of a radio frequency signal, a distance range at which the user is located. When the user is in a long distance range, the automobile is required to actively turn on vehicle lamps to provide illumination according to the distance range of the user. When the user is in a short distance range, the automobile is required to actively open a vehicle door according to the distance range of the user, so that the user can get on the automobile conveniently.

However, in a positioning process through a radio frequency signal, since there is an error in the field strength of the acquired radio frequency signal, the intelligent device cannot accurately locate the distance range at which the user is located, and the intelligent device cannot accurately determine whether the user is in the long distance range or the short distance range. As a result, the intelligent device cannot execute the desired response action of the user. In addition, due to an environment in which the intelligent device is actually located, the field intensity of the radio frequency signal detected by the intelligent device fluctuates, so that the intelligent device cannot execute the desired response action of the user because it cannot accurately locate the distance range at which the user is located.

### Summary of the Invention

A first objective of the present disclosure is to provide an action execution method to solve the problem in the prior art that an intelligent device cannot execute a desired response action of a user because it cannot accurately locate a distance range at which the user is located. A second objective is to provide a distance determination method. A third objective is to provide an action execution apparatus. A fourth objective is to provide a distance determination apparatus. A fifth objective is to provide a computer device. A sixth objective is to provide a computer-readable storage medium.

In order to achieve the above objectives, the present disclosure adopts the following technical solutions:
According to a first aspect, the present application provides an action execution method, applied to a transmitting device. The action execution method includes:
determining transmitting power of each target channel according to a signal distance range of each target channel;
transmitting a broadcast signal on the basis of the transmitting power of each target channel;
establishing a communication connection to a receiving device in response to a communication request of the receiving device;
sending the signal distance range of each target channel to the receiving device; and
executing a response action according to a received signal distance range at which the receiving device is currently located.

In combination with the first aspect, in a first possible implementation, the transmitting a broadcast signal on the basis of the transmitting power of each target channel includes:
determining a transmitting duration of each target channel according to a time proportion of each target channel in a preset transmitting cycle duration, wherein a sum of the transmitting durations of all the target channels is equal to the preset transmitting cycle duration; and
transmitting the broadcast signal on the basis of the preset transmitting cycle duration, the transmitting power of each target channel, and the transmitting duration of each target channel.

In combination with the first possible implementation of the first aspect, in a second possible implementation, the sending the signal distance range of each target channel to the receiving device includes:
sending the preset transmitting cycle duration, the transmitting duration of each target channel, and the signal distance range of each target channel to the receiving device.

In combination with the first aspect, in a third possible implementation, the establishing a communication connection to a receiving device in response to a communication request of the receiving device includes:
determining, in response to the communication request of the receiving device, a target channel with maximum transmitting power to be a communication channel, and establishing the communication connection to the receiving device by using the communication channel.

In combination with the first aspect, in a fourth possible implementation, the action execution method further includes:
determining a target quantity of the target channels according to the signal distance range corresponding to each response action; and
determining the target quantity of channels that are in idle states to be the target channels.

According to a second aspect, the present application provides a distance determination method, applied to a receiving device. The distance determination method includes:
sending a communication request to a transmitting device on the basis of a received broadcast signal of the transmitting device, so as to establish a communication connection to the transmitting device;
receiving a signal distance range, sent by the transmitting device, of each target channel;
determining a signal distance range at which the receiving device is currently located according to the detected target channels and the signal distance range of each target channel; and
sending the signal distance range at which the receiving device is currently located to the transmitting device.

In combination with the second aspect, in a first possible implementation, the determining a signal distance range at which the receiving device is currently located according to the detected target channels and the signal distance range of each target channel includes:
determining, in a case that at least two target channels have been detected, a minimum signal distance range on the basis of the signal distance range of each target channel; and
determining the minimum signal distance range to be the signal distance range at which the receiving device is currently located.

In combination with the second aspect, in a second possible implementation, the distance determination method further includes:
executing a feedback action according to the signal distance range at which the receiving device is currently located.

According to a third aspect, the present application provides an action execution apparatus, applied to a transmitting device. The action execution apparatus includes:
a power determination module, configured to: determine transmitting power of each target channel according to a signal distance range of each target channel;
a signal transmitting module, configured to transmit a broadcast signal on the basis of the transmitting power of each target channel;
a communication establishment module, configured to establish a communication connection to a receiving device in response to a communication request of the receiving device;
a distance sending module, configured to send the signal distance range of each target channel to the receiving device; and
an action execution module, configured to execute a response action according to a received signal distance range at which the receiving device is currently located.

According to a fourth aspect, the present application provides a distance determination apparatus, applied to a receiving device. The distance determination apparatus includes:
a request sending module, configured to send a communication request to a transmitting device on the basis of a received broadcast signal of the transmitting device, so as to establish a communication connection to the transmitting device;
a distance receiving module, configured to receive a signal distance range, sent by the transmitting device, of each target channel;
a distance determination module, configured to determine a signal distance range at which the receiving device is currently located according to the detected target channels and the signal distance range of each target channel; and
a current distance sending module, configured to send the signal distance range at which the receiving device is currently located to the transmitting device.

According to a fifth aspect, the present application provides a computer device. The computer device includes a memory and a processor; the memory stores a computer program; and the computer program, when executed by the processor, implements the action execution method as described in the first aspect or the distance determination method as described in the second aspect.

According to a sixth aspect, the present application provides a computer-readable storage medium. The computer-readable storage medium stores a computer program; and the computer program, when executed by a processor, implements the action execution method as described in the first aspect or the distance determination method as described in the second aspect.

Beneficial effects of the present disclosure are as follows:
(1) The signal distance range at which the receiving device is located can be accurately determined without acquiring a field intensity of a signal.
(2) The transmitting device executes the response action according to the signal distance range at which the receiving device is located, so as to provide a desired intelligent interaction scenario for a user.
(3) The influence, caused by environments at which the devices are actually located, on acquisition of a distance between the transmitting device and the receiving device is avoided because it is not necessary to acquire the field intensity of the signal.

### Brief Description of the Drawings

The accompanying drawings are intended to provide a further understanding of the embodiments of the present disclosure and constitute a part of this specification. The accompanying drawings and specific implementations below are used together for explaining the embodiments of the present disclosure rather than constituting a limitation on the embodiments of the present disclosure. In the drawings:
FIG. 1 is a flowchart of an action execution method according to an embodiment of the present application;
FIG. 2 is a schematic structural diagram of a transmitting device according to an embodiment of the present application;
FIG. 3 is a flowchart of a distance determination method according to an embodiment of the present application;
FIG. 4 is an example diagram of a signal distance range of each target channel according to an embodiment of the present application;
FIG. 5 is an example diagram of establishing a communication connection between a transmitting device and a receiving device according to an embodiment of the present application;
FIG. 6 is a schematic structural diagram of an action execution apparatus according to an embodiment of the present application; and
FIG. 7 is a schematic structural diagram of a distance determination apparatus according to an embodiment of the present application.

### Detailed Description of the Embodiments

Specific implementations of the embodiments of the present disclosure are described in detail below with reference to the accompanying drawings in the embodiments of the present disclosure. It should be understood that the specific implementations described herein are merely used to describe and explain the embodiments of the present disclosure, but are not intended to limit the embodiments of the present disclosure.

Assemblies of the embodiments of the present disclosure commonly described and shown in the accompanying drawings here may be arranged and designed in a variety of different configurations. Therefore, the following detailed descriptions of the embodiments of the present disclosure provided in the accompanying drawings are not intended to limit the scope of the claimed present disclosure, but merely represent selected embodiments of the present disclosure. All other embodiments obtained by a person skilled in the art based on the embodiments of present disclosure without making creative efforts shall fall within the protection scope of present disclosure.

In the following text, the terms "include", "have" and their cognates that can be used in the various embodiments of the present disclosure are only intended to represent specific features, digits, steps, operations, elements, components, or combinations of the aforementioned terms, and should not be understood as first excluding the existence of one or more other features, digits, steps, operations, elements, components, or combinations of the aforementioned terms, or the possibility of adding one or more features, digits, steps, operations, components, components, or combinations of the aforementioned terms.

In addition, the terms "first", "second", "third", and the like are only for the purpose of description, and may not be understood as indicating or implying the relative importance.

Unless otherwise defined, all terms (including technical and scientific terms) used herein have the same meaning as commonly understood by a person of ordinary skill in the art to which the various embodiments of the present disclosure belong. The terms (such as those limited in commonly used dictionaries) will be interpreted as having the same contextual meaning as in the relevant technical field and will not be interpreted as having idealized or overly formal meanings unless clearly defined in the various embodiments of the present disclosure.

### Embodiment 1

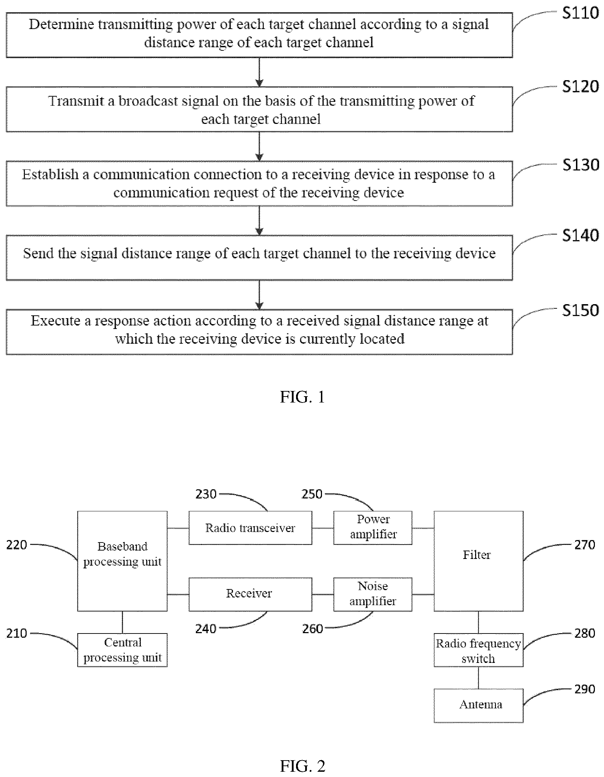

Referring to FIG. 1, FIG. 1 is a flowchart of an action execution method according to an embodiment of the present application.

The action execution method in FIG. 1 is applied to a transmitting device. The action execution method in FIG. 1 includes:
In S 110, transmitting power of each target channel is determined according to a signal distance range of each target channel.

The transmitting device is calibrated before a communication is established between the transmitting device and a receiving device. Specifically, signal distance ranges covered by different transmitting powers of the transmitting device are measured to obtain a relationship table between the signal distance ranges and the transmitting powers. The signal distance range refers to a signal coverage range of the transmitting device at a specific transmitting power. After the signal distance range of each target channel is acquired, the relationship table between the signal distance ranges and the transmitting powers is searched to find the transmitting power corresponding to the signal distance range of the target channel, and the transmitting power corresponding to the signal distance range of the target channel is determined to be the transmitting power of the target channel. It should be understood that a size of the signal distance range of each target channel is set according to an actual need and is not limited here. A type of the transmitting device is also set according to an actual need and is not limited here.

In S120, a broadcast signal is transmitted on the basis of the transmitting power of each target channel.

In a case that the transmitting power of each target channel is determined, the transmitting device transmits the broadcast signal on the basis of the transmitting power of each target channel, and waits for a receiving device to enter the signal distance range to establish a communication connection to the receiving device.

In S130, a communication connection is established to a receiving device in response to a communication request of the receiving device.

When the receiving device enters the signal distance range of the target channel, the receiving device will receive the broadcast signal of the transmitting device and send the communication request to the transmitting device. The transmitting device establishes the communication connection to the receiving device in response to the communication request of the receiving device. It should be understood that a communication protocol during the establishment of the communication connection between the transmitting device and the receiving device is set according to an actual need, which can be a Bluetooth communication protocol or a Wireless Fidelity (WiFi) communication protocol and is not limited here.

In this embodiment of the present application, a communication connection is established to a receiving device in response to a communication request of the receiving device, which includes:
a target channel with maximum transmitting power is determined, in response to the communication request of the receiving device, to be a communication channel, and the communication connection is established to the receiving device by using the communication channel.

After the communication connection between the transmitting device and the receiving device is established through the target channel, if the transmitting power of the target channel is higher, the communication connection between the transmitting device and the receiving device is more stable. In a case that the transmitting device transmits broadcast signals through a plurality of target channels, the receiving device sends the communication request to the transmitting device on the basis of the detected broadcast signals. The transmitting device acquires the target channel with the maximum transmitting power in response to the communication request of the receiving device. The transmitting device determines the target channel with the maximum transmitting power to be the communication channel and establishes the communication connection to the receiving device by using the communication channel.

In S140, the signal distance range of each target channel is sent to the receiving device.

After the communication connection between the transmitting device and the receiving device is established, the transmitting device sends the signal distance range of each target channel to the receiving device. The receiving device determines, according to the detected target channels and the signal distance range of each target channel, a signal distance range at which the receiving device is currently located.

In this embodiment of the present application, a broadcast signal is transmitted on the basis of the transmitting power of each target channel, which includes:
a transmitting duration of each target channel is determined according to a time proportion of each target channel in a preset transmitting cycle duration, wherein a sum of the transmitting durations of all the target channels is equal to the preset transmitting cycle duration; and
the broadcast signal is transmitted on the basis of the preset transmitting cycle duration, the transmitting power of each target channel, and the transmitting duration of each target channel.

The transmitting duration of each target channel is determined according to a time proportion of each target channel in a preset transmitting cycle duration, where the transmitting duration refers to a duration of transmitting the broadcast signal by the target channel at the transmitting power, and a sum of the transmitting durations of all the target channels is equal to the preset transmitting cycle duration. A value of the preset transmitting cycle duration is set according to an actual need, and is not limited here. The value of the transmitting duration of each target channel varies according to the time proportion of the target channel in the preset transmitting cycle duration, and is not limited here. If the time proportion of the target channel in the preset transmitting cycle duration is larger, the transmitting duration of the target channel in the preset transmitting cycle duration is longer, and the communication efficiency of the target channel in the preset transmitting cycle duration is higher.

By adjusting the time proportion of each target channel in the preset transmitting cycle duration, the communication efficiency of the target channel is adjusted, so as to meet requirements of different communication scenarios. Specifically, since the target channel that is not a communication channel is not used for transmission, in this embodiment of the present application, the time proportion of the target channel that is a communication channel in the preset transmitting cycle duration is greater than the time proportion of the target channel that is not a communication channel in the preset transmitting cycle duration, that is, the transmitting duration of the communication channel is longer. After the communication connection between the transmitting device and the receiving device is established, the communication channel transmits the broadcast signal at a longer transmitting duration. The communication efficiency of the communication channel is high, which facilitates information transmission between the transmitting device and the receiving device, so that the transmitting device can quickly send the signal distance range of each target channel to the receiving device.

For ease of understanding, a space in this embodiment of the present application includes a target channel S 1 and a target channel S2, and the preset transmitting cycle duration is 1 second. It is acquired that a transmitting duration of the target channel S1 is 0.6 seconds, and the transmitting duration of the target channel S2 is 0.4 seconds. A sum of the transmitting durations of the target channel S 1 and the target channel S2 is equal to the preset transmitting cycle duration. The broadcast signal is transmitted on the basis of the preset transmitting cycle duration, the transmitting power of each target channel, and the transmitting duration of each target channel. Specifically, the transmitting device sends the broadcast signal cyclically every second. The transmitting device transmits the broadcast signal on the basis of the transmitting power of the target channel S1 within the first 0.6 seconds of a preset cycle, and transmits the broadcast signal on the basis of the transmitting power of the target channel S2 within the last 0.4 seconds of the preset cycle. By determining the transmitting duration of each target channel and controlling the proportion of the transmitting duration of each target channel in the preset cycle, a communication rate of each target channel is controlled. A plurality of channels send broadcast signals nearly simultaneously through sharding occupation of each target channel in a time domain.

In this embodiment of the present application, the signal distance range of each target channel is sent to the receiving device, which includes:
the preset transmitting cycle duration, the transmitting duration of each target channel, and the signal distance range of each target channel are sent to the receiving device.

After the communication connection is established between the transmitting device and the receiving device, the transmitting device sends the preset transmitting cycle duration, the transmitting duration of each target channel, and the signal distance range of each target channel to the receiving device. The receiving device detects the target channel according to the transmitting duration of the broadcast signal received within the preset cycle. For ease of understanding, in this embodiment of the present application, the signal distance range of the target channel S1 is a signal distance range D1, and the signal distance range of the target channel S2 is a signal distance range D2. In a case that the broadcast signal with the transmitting duration of 0.6 seconds has been detected within the preset cycle, it is determined that the target channel S1 has been detected, and then the signal distance range at which the receiving device is currently located is determined to be the signal distance range D1. In a case that the receiving device has detected the broadcast signal with the transmitting duration of 0.6 seconds and the broadcast signal with the transmitting duration of 0.4 seconds within the preset cycle, it is determined that the target channel S1 and the target channel S2 have been detected and that the signal distance range at which the receiving device is currently located is the signal distance range D2. It should be understood that the receiving device can also detect the target channel in other ways, which will not be elaborated here.

In S150, a response action is executed according to a received signal distance range at which the receiving device is currently located.

After the signal distance range at which the receiving device is currently located is determined, the receiving device sends the signal distance range at which the receiving device is currently located to the transmitting device. The transmitting device executes, according to the received signal distance range at which the receiving device is currently located, the response action corresponding to the signal distance range at which the receiving device is currently located.

The response action corresponding to each signal distance range can be determined in advance. For ease of understanding, the transmitting device in this embodiment of the present application is a vehicle. The response action corresponding to the signal distance range D1 is to turn on vehicle lamps, and the response action corresponding to the signal distance range D2 is to open a vehicle door. The signal distance range D1 includes the signal distance range D2. In an intelligent interaction scenario, the receiving device is a device that a user carries therealong. In a case that the signal distance range, received by the transmitting device, at which the receiving device is currently located is the signal distance range D1, it is determined that a distance between the receiving device and the transmitting device is long. The response action executed by the transmitting device is to turn on the vehicle lamps to provide illumination for the user. In a case that the signal distance range, received by the transmitting device, at which the receiving device is currently located is the signal distance range D2, it is determined that a distance between the receiving device and the transmitting device is short. The response action executed by the transmitting device is to open the vehicle door to facilitate the user to get on the vehicle quickly.

In this embodiment of the present application, the action execution method further includes:
a target quantity of the target channels is determined according to the signal distance range corresponding to each response action; and
the target quantity of channels that are in idle states are determined to be the target channels.

The target quantity of the target channels is determined in advance to determine the target channels suitable for different signal distance ranges. In this embodiment of the present application, the transmitting device executes the two response actions: opening the vehicle door and turning on the vehicle lamps, that is, a quantity of the response actions is two. The target quantity of the target channels is determined according to the signal distance range corresponding to each response action. If the response action of turning on the vehicle lamps corresponds to the signal distance range D1, and the response action of opening the vehicle door corresponds to the signal distance range D2, the target quantity of the target channels is determined to be two. A plurality of channels in idle states can be usually searched in a space, and the target quantity of channels in the idle states are determined to be the target channel, that is, two channels in the idle states are determined to the target channels, so that the target channels are used to transmit the broadcast signals. If the signal distance range corresponding to the response action of turning on the vehicle lamps is equal to the signal distance range corresponding to the response action of opening the vehicle door, it is determined that the signal distance ranges corresponding to the two response actions are the same, and the target quantity of the target channel is 1.

Referring to FIG. 2, FIG. 2 is a schematic structural diagram of a transmitting device according to an embodiment of the present application.

For ease of understanding, an embodiment of the present application provides a transmitting device. Specifically, the transmitting device includes a central processing unit 210, a baseband processing unit 220, a radio transceiver 230, a receiver 240, a power amplifier 250, a noise amplifier 260, a filter 270, a radio frequency switch 280, and an antenna 290. The central processing unit 210 is configured to perform logical control and information transmission of the transmitting device, for example, to control establishment of a communication connection between the transmitting device and a receiving device. The baseband processing unit 220 is configured to convert data transmitted by the central processing unit 210 into a fundamental digital signal and perform response source encoding, so as to improve the information encoding efficiency and the communication effectiveness. The radio transceiver 230 is configured to move a spectrum of the fundamental digital signal to a transmitting frequency band and transmit the spectrum of the fundamental digital signal to the power amplifier 250. The receiver 240 is configured to convert a received high-frequency signal into a fundamental digital signal. The power amplifier 250 is configured to amplify transmitting power of the signal transmitted by the radio transceiver 230, to achieve signal propagation in a space. Specifically, the power of the signal is amplified to transmitting power of the target channel according to a transmitting duration of each target channel, so that the signal of each target channel covers different signal distance ranges. The noise amplifier 260 is configured to convert the signal in the signal into the high-frequency signal that can be processed by the receiver 240. The filter 270 is configured to filter out an interference signal during signal transmitting and receiving, which reduces harmonic interference in the transmitting device. The radio frequency switch 280 is configured to switch target channels and adjust an operating state of the antenna 280. The antenna 280 is configured to transmit the broadcast signal or receive a signal sent by the receiving devices in the space.

The present application provides an action execution method, applied to a transmitting device. The action execution method includes: determining transmitting power of each target channel according to a signal distance range of each target channel; transmitting a broadcast signal on the basis of the transmitting power of each target channel; establishing a communication connection to a receiving device in response to a communication request of the receiving device; sending the signal distance range of each target channel to the receiving device; and executing a response action according to a received signal distance range at which the receiving device is currently located. The transmitting device executes the response action according to the signal distance range at which the receiving device is located, so as to provide a desired intelligent interaction scenario for a user. The signal distance range at which the receiving device is located can be accurately determined without acquiring a field intensity of a signal. Meanwhile, the influence, caused by environments at which the devices are actually located, on acquisition of a distance between the transmitting device and the receiving device is avoided because it is not necessary to acquire the field intensity of the signal.

### Embodiment 2

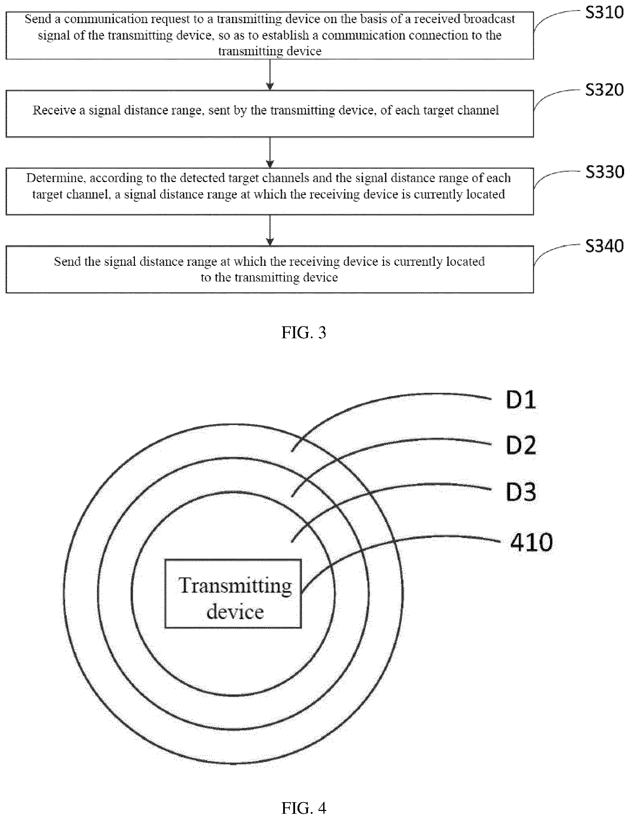

Referring to FIG. 3, FIG. 3 is a flowchart of a distance determination method according to an embodiment of the present application.

The distance determination method in FIG. 3 is applied to a receiving device. The distance determination method in FIG. 3 includes:
In S310, a communication request is sent to a transmitting device on the basis of a received broadcast signal of the transmitting device, so as to establish a communication connection to the transmitting device.

When the receiving device enters a signal distance coverage range of the transmitting device, the receiving device will receive the broadcast signal of the transmitting device. The receiving device sends the communication request to the transmitting device on the basis of the broadcast signal. The transmitting device establishes the communication connection to the receiving device in response to the communication request.

In S320, a signal distance range, sent by the transmitting device, of each target channel is received.

The transmitting device transmits the broadcast signals through different target channels, and the receiving device receives the signal distance range, sent by the transmitting device, of each target channel, so as to determine a signal distance range at which the receiving device is currently located according to the signal distance range of each target channel.

It should be noted that the receiving device can also receive other information sent by the transmitting device. Specifically, the receiving device can also receive a preset transmitting cycle duration transmitted by the transmitting device and a transmitting duration of each target channel, so as to detect the target channel according to the preset transmitting cycle duration transmitted by the transmitting device and the transmitting duration of each target channel.

In S330, a signal distance range at which the receiving device is currently located is determined according to the detected target channels and the signal distance range of each target channel.

When a distance between the receiving device and the transmitting device changes, the target channels detected by the receiving device change correspondingly, so that the receiving device can determine, according to the detected target channels, the signal distance range at which the receiving device is currently located. Specifically, after receiving the signal distance range of each target channel, the receiving device determines the signal distance ranges of the detected target channels according to the detected target channels and the signal distance range of each target channel, and determines, on the basis of the signal distance ranges of the detected target channels, the signal distance range at which the receiving device is currently located.

In this embodiment of the present application, a signal distance range at which the receiving device is currently located is determined according to the detected target channels and the signal distance range of each target channel, which includes:
a minimum signal distance range is determined, in a case that at least two target channels have been detected, on the basis of the signal distance range of each target channel; and
the minimum signal distance range is determined to be the signal distance range at which the receiving device is currently located.

Referring to FIG. 4, FIG. 4 is an example diagram of a signal distance range of each target channel according to an embodiment of the present application.

As shown in the figure, the signal distance range of each target channel is a circle taking a transmitting device 410 as a circle center. For ease of understanding, a space in this embodiment of the present application includes a target channel S1, a target channel S2, and a target channel S3. Transmitting power of the target channel S1 is greater than transmitting power of the target channel S2, and the transmitting power of the target channel S2 is greater than transmitting power of the target channel S3. The signal distance range of the target channel S1 is a signal distance range D1; the signal distance range of the target channel S2 is a signal distance range D2; and the signal distance range of the target channel S3 is a signal distance range D3. Higher transmitting power of a channel indicates a larger signal distance range, so that the signal distance range D1 includes the signal distance range D2 and the signal distance range D3, and the signal distance range D2 includes the signal distance range D3, that is, the signal distance range D1 is the maximum signal distance range.

In a case that the receiving device detects no target channel, it is determined that the receiving device is not located within a signal distance range of the transmitting device. In a case that the receiving device has detected target channels, it is determined that the receiving device is located within a signal distance range of the transmitting device, and a signal distance range at which the receiving device is currently located is determined according to the detected target channels and the signal distance range of each target channel. Specifically, in a case that only the target channel S1 has been detected, the receiving device determines that the receiving device is only located in the signal distance range of the target channel S 1. The receiving device determines that the signal distance range at which the receiving device is currently located is the signal distance range D1.

In a case that the receiving device has detected both the target channel S1 and the target channel S2, it is determined that the receiving device is located within the signal distance ranges of both the target channel S 1 and the target channel S2. Since the signal distance range D1 of the target channel S1 is greater than the signal distance range D2 of the target channel S2, the receiving device determines that the signal distance range at which the receiving device is currently located is the signal distance range D2.

In a case that the receiving device has detected the target channel S 1, the target channel S2, and the target channel S3, it is determined that the receiving device is simultaneously located within the signal distance ranges of the target channel S1, the target channel S2, and the target channel S3. Since the signal distance range D1 of the target channel S1 is greater than the signal distance range D2 of the target channel S2, and the signal distance range D2 of the target channel S2 is greater than the signal distance range D3 of the target channel S3, the receiving device determines that the signal distance range at which the receiving device is currently located is within the signal distance range D3.

It should be understood that the signal distance range of each target channel is set according to an actual need and is not limited here. For ease of understanding, in this embodiment of the present application, the signal distance range D1 is greater than 10 meters and less than or equal to 15 meters; the signal distance range D2 is greater than 5 meters and less than or equal to 10 meters; and the signal distance range D2 is greater than 0 meter and less than or equal to 5 meters. The distance between the transmitting device and the receiving device is determined according to the signal distance range. If a difference value between an upper limit value and a lower limit value of each signal distance range is smaller, the determined distance between the transmitting device and the receiving device is more accurate.

In S340, the signal distance range at which the receiving device is currently located is sent to the transmitting device.

The receiving device sends the signal distance range at which the receiving device is currently located to the transmitting device, so that the transmitting device can determine a position of the receiving device without acquiring a field intensity of a radio frequency signal and then execute a response action corresponding to the signal distance range at which the receiving device is currently located, so as to provide a user with a desired response scenario.

In this embodiment of the present application, the distance determination method further includes:
a feedback action is executed according to the signal distance range at which the receiving device is currently located.

A type of the receiving device is set according to an actual need and is not limited here. The receiving device executes the feedback action according to the signal distance range at which the receiving device is currently located, so as to indicate the signal distance range at which the receiving device is currently located. The feedback action is set according to an actual need and is not limited here. For ease of understanding, in this embodiment of the present application, the receiving device is a mobile terminal, and the feedback action is a vibration prompt action and an audible-visible prompt action.

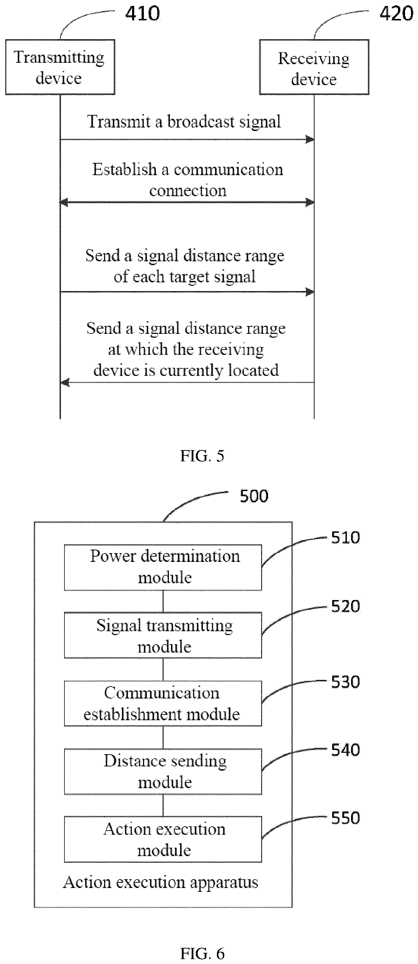

Referring to FIG. 5, FIG. 5 is an example diagram of establishing a communication connection between a transmitting device and a receiving device according to an embodiment of the present application.

The transmitting device 410 transmits a broadcast signal and waits to establish a communication connection to the receiving device 420. When the receiving device 420 enters a signal distance coverage range of the transmitting device 410, a communication request is sent to the transmitting device 410 on the basis of the broadcast signal to establish the communication connection. After the communication connection between the transmitting device 410 and the receiving device 420 is established, a signal distance range of each target channel is sent to the receiving device 420. The receiving device 420 sends a signal distance range at which the receiving device is currently located to the transmitting device 410, so that the transmitting device 410 executes a response action according to the signal distance range at which the receiving device 420 is currently located.

It should be understood that after the signal distance range of each target channel is received, the receiving device 420 can also send determination information to the transmitting device 410 to indicate the transmitting device 410 that the signal distance range of each target channel has been received, which will not be specifically shown in the figure. After executing a response action according to the signal distance range at which the receiving device 420 is currently located, the transmitting device 410 can also send action completion information to the receiving device 420 to indicate the receiving device 420 that the response action has been completed, which will not be specifically shown in the figure.

### Embodiment 3

Referring to FIG. 6, FIG. 6 is a schematic structural diagram of an action execution apparatus according to an embodiment of the present application. The action execution apparatus 500 in FIG. 6 is applied to a transmitting device. The action execution apparatus 500 in FIG. 6 includes:
a power determination module 510, configured to: determine transmitting power of each target channel according to a signal distance range of each target channel;
a signal transmitting module 520, configured to transmit a broadcast signal on the basis of the transmitting power of each target channel;
a communication establishment module 530, configured to establish a communication connection to a receiving device in response to a communication request of the receiving device;
a distance sending module 540, configured to send the signal distance range of each target channel to the receiving device; and
an action execution module 550, configured to execute a response action according to a received signal distance range at which the receiving device is currently located.

In this embodiment of the present application, the signal transmitting module 520 includes:
a duration determination sub-module, configured to determine a transmitting duration of each target channel according to a time proportion of each target channel in a preset transmitting cycle duration, where a sum of the transmitting durations of all the target channels is equal to the preset transmitting cycle duration; and
a broadcast signal transmitting sub-module, configured to transmit the broadcast signal on the basis of the preset transmitting cycle duration, the transmitting power of each target channel, and the transmitting duration of each target channel.

In this embodiment of the present application, the distance sending module 540 is further configured to send the preset transmitting cycle duration, the transmitting duration of each target channel, and the signal distance range of each target channel to the receiving device.

In this embodiment of the present application, the communication establishment module 530 is further configured to: determine, in response to the communication request of the receiving device, a target channel with maximum transmitting power to be a communication channel, and establish the communication connection to the receiving device by using the communication channel.

In this embodiment of the present application, the action execution apparatus 500 further includes:
a quantity determination module, configured to determine a target quantity of the target channels according to the signal distance range corresponding to each response action; and
a channel determination module, configured to determine the target quantity of channels that are in idle states to be the target channels.

The action execution apparatus 500 is configured to execute the corresponding steps in the action execution method described above. Specific implementations of the various functions will not be described one by one here. The optional examples in Embodiment 1 are also applicable to the action execution apparatus 500 of Embodiment 3.

### Embodiment 4

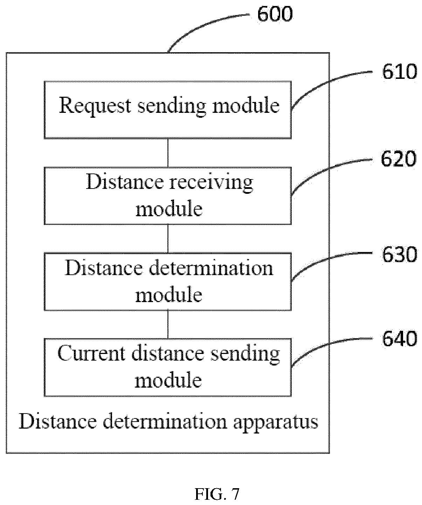

Referring to FIG. 7, FIG. 7 is a schematic structural diagram of a distance determination apparatus according to an embodiment of the present application. The distance determination apparatus 600 in FIG. 7 is applied to a receiving device. The distance determination apparatus 600 in FIG. 7 includes:
a request sending module 610, configured to send a communication request to a transmitting device on the basis of a received broadcast signal of the transmitting device, so as to establish a communication connection to the transmitting device;
a distance receiving module 620, configured to receive a signal distance range, sent by the transmitting device, of each target channel;
a distance determination module 630, configured to determine a signal distance range at which the receiving device is currently located according to the detected target channels and the signal distance range of each target channel; and
a current distance sending module 640, configured to send the signal distance range at which the receiving device is currently located to the transmitting device.

In this embodiment of the present application, the distance determination module 630 includes:
a minimum distance determination sub-module, configured to determine, in a case that at least two target channels have been detected, a minimum signal distance range on the basis of the signal distance range of each target channel; and
a distance range determination sub-module, configured to determine the minimum signal distance range to be the signal distance range at which the receiving device is currently located.

In this embodiment of the present application, the distance determination apparatus 600 further includes:
a feedback action execution module, configured to execute a feedback action according to the signal distance range at which the receiving device is currently located.

The distance determination apparatus 600 is configured to execute the corresponding steps in the distance determination method described above. Specific implementations of the various functions will not be described one by one here. The optional examples in Embodiment 2 are also applicable to the distance determination apparatus 600 of Embodiment 4.

The embodiments of the present application further provide a computer device. The computer device includes a memory and a processor. The memory stores a computer program, and the computer program, when executed by the processor, implements the action execution method according to Embodiment 1 or the distance determination method according to Embodiment 2.

In this embodiment, the power determination module 510, the signal transmitting module 520, the communication establishment module 530, the distance sending module 540, the action execution module 550, the request sending module 610, the distance receiving module 620, the distance determination module 630, and the current distance sending module 640 are all stored as program units in the memory. The processor executes the above program units stored in the memory to achieve the corresponding functions.

The processor includes a kernel, and the kernel calls the corresponding program units from the memory. There can be one or more kernels. The problem that an intelligent device cannot execute a desired response action of a user because it cannot accurately locate a distance range at which the user is located is solved by adjusting the kernel.

The memory may include a volatile memory in a computer-readable medium, a Random Access Memory (RAM) and/or a non-volatile memory, and the like, such as a Read-Only Memory (ROM) or a flash RAM. The memory includes at least one storage chip.

The embodiments of the present application provide a computer-readable storage medium. The computer-readable storage medium stores a computer program which, when executed by a processor, implements the action execution method according to Embodiment 1 or the distance determination method according to Embodiment 2.

Those skilled in the art should understand that the embodiments of the present application may be methods, systems or computer program products. Therefore, the present application may adopt the form of a complete hardware embodiment, a complete software embodiment, or a software and hardware combination embodiment. In addition, the present application may adopt the form of a computer program product implemented on one or multiple computer-sensitive storage media (including, but not limited to, a magnetic disk memory, a compact disc read-only memory (CD-ROM), an optical memory and the like) including computer-sensitive program codes.

The present application is described by referring to flowcharts and/or block diagrams of methods, devices (systems) and computer program products according to the embodiments of the present application. It is worthwhile to note that computer program instructions can be used to implement each flow and/or each block in the flowcharts and/or the block diagrams and a combination of a flow and/or a block in the flowcharts and/or the block diagrams. These computer program instructions may be provided to a general-purpose computer, a dedicated computer, an embedded processor, or a processor of another programmable data processing device to generate a machine, so that the instructions executed by the computer or the processor of the another programmable data processing device generate an apparatus for implementing a specific function in one or more flows in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more flows in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more flows in the flowcharts and/or in one or more blocks in the block diagrams.

In one typical configuration, a computing device includes one or multiple central processing units (CPU), an input/output interface, a network interface and an internal memory.

The memory may include a volatile memory in a computer readable medium, a RAM and/or a non-volatile memory, etc., such as an ROM or a flash RAM. The memory is an example of the computer-readable medium.

The computer-readable storage medium includes non-volatile, volatile, movable, and unmovable media that can store information by using any method or technology. The information can be computer-readable instructions, data structures, program modules, or other data. Examples of computer storage media include, but not limited to, a Phase-change Random Access Memory (PRAM), a Static Random Access Memory (SRAM), a Dynamic Random Access Memory (DRAM), other types of RAMs, an ROM, an Electrically Erasable Programmable Read-Only Memory (EEPROM), a flash memory or other internal memory technologies, a CD-ROM, a Digital Video Disk (DVD) or other optical memories, a magnetic cartridge type magnetic tape, a magnetic tape/disk storage device or other magnetic storage devices or any other non-transmitting media, and may be used for storing information that may be accessed by the computing device. The computer readable medium does not include transitory computer readable media, such as modulated data signals and carriers, according to definitions herein.

It is worthwhile to note that the terms "comprise", "include", or any other variation thereof are intended to cover a non-exclusive inclusion, so that a process, a method, an article, or a device that includes a list of elements includes those elements and further includes other elements not expressly listed or inherent to such a process, method, article, or device. Without more constraints, an element limited by "includes a ..." does not preclude the existence of additional identical elements in the process, method, product, or device that includes the element.

The above contents are only the embodiments of the present disclosure, but not intended to limit the present disclosure. Those skilled in the art can make various changes and modifications to the present application. Any modifications, equivalent replacements, improvements and the like that are made without departing from the spirit and the principle of the present application shall all fall within the scope of claims of the present application.

## Claims

1. An action execution method, applied to a transmitting device, wherein the method comprises:
determining transmitting power of each target channel according to a signal distance range of each target channel;
transmitting a broadcast signal on the basis of the transmitting power of each target channel;
establishing a communication connection to a receiving device in response to a communication request of the receiving device;
sending the signal distance range of each target channel to the receiving device; and
executing a response action according to a received signal distance range at which the receiving device is currently located.

2. The action execution method according to claim 1, wherein the transmitting a broadcast signal on the basis of the transmitting power of each target channel comprises:
determining a transmitting duration of each target channel according to a time proportion of each target channel in a preset transmitting cycle duration, wherein a sum of the transmitting durations of all the target channels is equal to the preset transmitting cycle duration; and
transmitting the broadcast signal on the basis of the preset transmitting cycle duration, the transmitting power of each target channel, and the transmitting duration of each target channel.

3. The action execution method according to claim 2, wherein the sending the signal distance range of each target channel to the receiving device comprises:
sending the preset transmitting cycle duration, the transmitting duration of each target channel, and the signal distance range of each target channel to the receiving device.

4. The action execution method according to claim 1, wherein the establishing a communication connection to a receiving device in response to a communication request of the receiving device comprises:
determining, in response to the communication request of the receiving device, a target channel with maximum transmitting power to be a communication channel, and establishing the communication connection to the receiving device by using the communication channel.

5. The action execution method according to claim 1, wherein the method further comprises:
determining a target quantity of the target channels according to the signal distance range corresponding to each response action; and
determining the target quantity of channels that are in idle states to be the target channels.

6. A distance determination method, applied to a receiving device, wherein the method comprises:
sending a communication request to a transmitting device on the basis of a received broadcast signal of the transmitting device, so as to establish a communication connection to the transmitting device;
receiving a signal distance range, sent by the transmitting device, of each target channel;
determining, according to the detected target channels and the signal distance range of each target channel, a signal distance range at which the receiving device is currently located; and
sending the signal distance range at which the receiving device is currently located to the transmitting device.

7. The distance determination method according to claim 6, wherein the determining a signal distance range at which the receiving device is currently located according to the detected target channels and the signal distance range of each target channel comprises:
determining, in a case that at least two target channels have been detected, a minimum signal distance range on the basis of the signal distance range of each target channel; and
determining the minimum signal distance range to be the signal distance range at which the receiving device is currently located.

8. The distance determination method according to claim 6, wherein the method further comprises:
executing a feedback action according to the signal distance range at which the receiving device is currently located.

9. An action execution apparatus, applied to a transmitting device, wherein the apparatus comprises:
a power determination module, configured to: determine transmitting power of each target channel according to a signal distance range of each target channel;
a signal transmitting module, configured to transmit a broadcast signal on the basis of the transmitting power of each target channel;
a communication establishment module, configured to establish a communication connection to a receiving device in response to a communication request of the receiving device;
a distance sending module, configured to send the signal distance range of each target channel to the receiving device; and
an action execution module, configured to execute a response action according to a received signal distance range at which the receiving device is currently located.

10. A distance determination apparatus, applied to a receiving device, wherein the apparatus comprises:
a request sending module, configured to send a communication request to a transmitting device on the basis of a received broadcast signal of the transmitting device, so as to establish a communication connection to the transmitting device;
a distance receiving module, configured to receive a signal distance range, sent by the transmitting device, of each target channel;
a distance determination module, configured to determine a signal distance range at which the receiving device is currently located according to the detected target channels and the signal distance range of each target channel; and
a current distance sending module, configured to send the signal distance range at which the receiving device is currently located to the transmitting device.

11. A computer device, wherein the computer device comprises a memory and a processor; the memory stores a computer program; and the computer program, when executed by the processor, implements the action execution method according to any one of claims 1 to 5, or the distance determination method according to any one of claims 6 to 8.

12. A computer-readable storage medium, wherein the computer-readable storage medium stores a computer program; and the computer program, when executed by a processor, implements the action execution method according to any one of claims 1 to 5, or the distance determination method according to any one of claims 6 to 8.
